# EUROPEAN PATENT SPECIFICATION

(11) **EP 1 509 638 B1**
(45) Date of publication and mention of the grant of the patent: **08.10.2008**
(21) Application number: 03728802.4
(22) Date of filing: 12.05.2003
(51) Int. Cl.: C23F 15/00, C03C 25/14

(54) **WASHWATER NEUTRALIZATION SYSTEM FOR GLASS FORMING LINE**
GLASBESCHICHTUNGSANLAGE MIT SYSTEM ZUM NEUTRALISIEREN DES BEIM WASCHEN VERWENDETEN WASSERS
SYSTEME DE NEUTRALISATION DE L'EAU DE LAVAGE D'UNE CHAINE DE PRODUCTION DE VERRE

(30) Priority: 31.05.2002 US 160842; 31.12.2002 US 334441
(43) Date of publication of application: 02.03.2005
(73) Proprietor: OWENS CORNING, Toledo, Ohio 43659 (US)
(72) Inventor: CLINE, Harry, B., Heath, OH 43056 (US); DOWNEY, William, E., Granville, OH 43023 (US); CHEN, Liang, New Albany, OH 43054 (US); BULLOCK, Kathleen, M., Zanesville, OH 43701 (US); COOPER, William, R., Johnstown, OH 43031 (US); GUIGLEY, Kevin, S., Granville, OH 43023 (US); DELAVIZ, Yadollah, Lewis Center, OH 43035 (US); GIBSON, Bobby, R., Newark, OH 43055 (US); LEWIS, Michael, P., Newark, OH 43055 (US); MAGER, Michael, V., Pickerington, OH 43147 (US)
(74) Representative: Jacob, Reuben Ellis
(86) International application number: PCT/US2003/014670
(87) International publication number: WO 2003/102269

(56) References cited:
- WO-A-99/61384
- US-A- 5 690 715
- PATENT ABSTRACTS OF JAPAN vol. 1997, no. 08, 29 August 1997 (1997-08-29) & JP 09 094598 A (KURITA WATER IND LTD), 8 April 1997 (1997-04-08)

## Description

The present invention generally to washwater systems for glass forming lines and more specifically washwater neutralization systems for glass forming lines.

In the fiberglass industry, washwater systems remove excess binder from the equipment used to form fiberglass insulation products. This allows the equipment to be operated at optimum efficiency to maximize glass throughput. The washwater equipment also prevents damage due to the buildup of binder, thereby limiting the amount of downtime associated with equipment cleaning, repair and replacement. This equipment includes but is not limited to forming conveyors, forming hoodwalls, suction boxes, drop boxes, and forming fans.

Polycarboxylic acid based fiberglass binder resins have been used in the glass industry for insulation applications. Polycarboxylic acid based binders provide advantages in these applications in terms of mechanical properties and decreased reliance on environmental control equipment. It is also known to add a cobinder to the binder resin to improve the performance of the binder.

One problem with currently available washwater systems is that the polyacrylic acid binder, and hence the reclaim water, becomes acidic as the number of cycles of removing binder increases. This acidic reclaim water can corrode the walls of the forming and washwater equipment, which is typically made of carbon steel, thereby limiting the equipment's useful life. This results in added manufacturing costs due to equipment replacement and downtime. This also can result in decreased efficiency in the glass manufacturing process, resulting in increased manufacturing costs associated with rework and the like.

Various solutions have tried to address this corrosion problem. For example, stainless steel can replace carbon steel in the forming and washwater equipment due to its non-corrosive nature. However this equipment is expensive relative to carbon steel equipment.

The solution proposed in international patent application WO 99/61384 is to use specific polyacrylic acid based binder compositions, having lower emissions, comprising an aqueous solution of a polycarboxy polymer, a monomeric trihydric alcohol, a catalyst, a pH adjuster and a corrosion inhibitor.

Another solution proposed is to decrease the amount of cycles that reclaim water is introduced through the forming equipment. However, this also leads to increased costs in terms of water usage and wastewater removal. This also decreases the efficiency of the forming equipment associated with replacing the reclaim water.

It is thus highly desirable to improve the corrosion resistance of forming equipment and washwater equipment.

### SUMMARY OF THE INVENTION

The present invention reduces the corrosion rate of forming and washwater equipment by controlling the pH to between about 8.0 and 8.5 or above of reclaimed washwater used to clean the equipment and wash uncured polyacrylic binder, an optional cobinder and fiberglass from the equipment.

To accomplish this, a washwater neutralizing system is introduced within the closed loop system to ensure that the washwater is maintained between about 8.0 and 8.5 or above. This is accomplished by coupling a pH probe to the inside of a washwater holding tank to monitor the pH of the washwater. If the pH is measured by the probe at below about 8.5, a pump will introduce a quantity of the base solution, preferably a hydroxide solution, to the tank until the pH is raised to at least about 8.5. This ensures that reclaim washwater, used to wash the uncured binder and fibers from the equipment, is maintained at a pH which limits corrosion of the equipment. This increases the useful life of the forming equipment and decreases manufacturing costs associated with repair and replacement of forming equipment due to acid corrosion.

In another preferred embodiment, a closed-loop hoodwall reclaim washwater system is introduced in addition to the washwater reclaim washwater system. The hoodwall reclaim washwater system pumps washwater from a separate washwater tank to remove excess polyacrylic acid binder from the hoodwalls of the forming area or may be used as makeup water for preparation of the aqueous binder. The closed-loop hoodwall reclaim washwater system is not coupled to the washwater neutralizing system, so the washwater that is reclaimed is substantially free of base solution. The reclaimed washwater may then be returned to a binder makeup tank for reuse, thereby reducing binder costs. Further, because the recovered binder is substantially base solution free, bound fiberglass containing the recovered binder experiences better and more consistant curing as compared with binders having small amount of base solution, as even small amounts of base solution within the binder can inhibit curing of the binder. Also, bound fiberglass products having substantially base solution-free binders have decreased degradation rates associated with water absorption caused by the presence of polyacrylic acids salts, degradation that affects the insulating properties such as recovery, stiffness, and R-value of these products. The second reclaim system would therefore minimize the amount of base solution in the binder makeup, thereby reducing curing problems associated with the base solution. The second reclaim system also increases the amount of recoverable binder, thereby decreasing binder costs.

The foregoing and other advantages of the invention will become apparent from the following disclosure in which one or more preferred embodiments of the invention are described in detail and illustrated in the accompanying drawings. It is contemplated that variations in procedures, structural features and arrangement of parts may appear to a person skilled in the art without departing from the scope of or sacrificing any of the advantages of the invention.

Figure 1 illustrates a fiberglass forming line having a closed-loop washwater recovery system according to one preferred embodiment of the present invention; and

Figure 2 illustrates a fiberglass forming line having a closed-loop washwater recovery system and a closed-loop hoodwall washwater recovery system according to another preferred embodiment of the present invention.

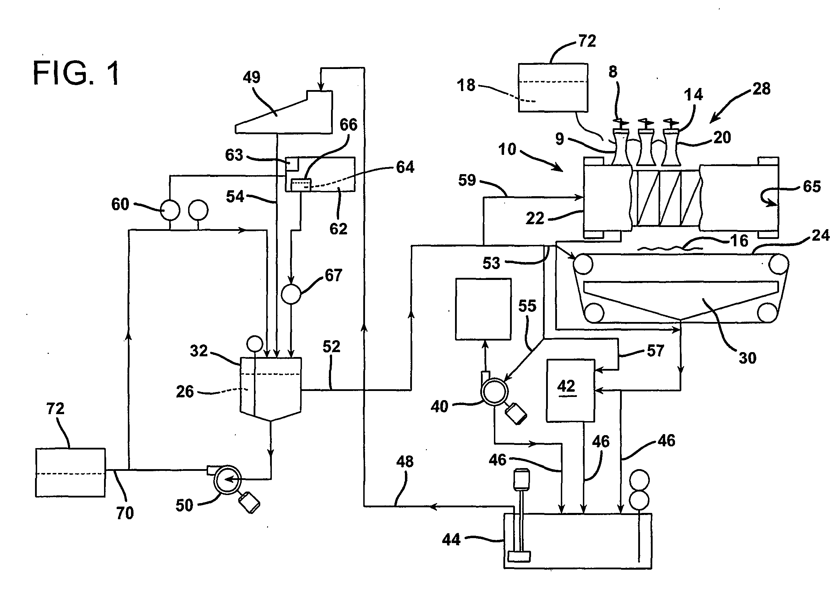

Figure 1 illustrates a fiberglass forming line 10 having a closed-loop washwater recovery system 12 according to one preferred embodiment of the present invention.

Fiberglass is formed on the forming line 10 in a multistep process. Molten glass is first introduced from a furnace (not shown) through a bushing (not shown) to a spinner 14 that forms a plurality of fiberglass fibers 8 in a method well known in the art. A water-based polyacrylic binder and an optional maleic acid or maleic anhydride cobinder 18 from a binder makeup tank 72 is sprayed onto the fibers 8 by a plurality of spaced nozzles (not shown) contained on a binder ring 20 to form an uncured binder coated fiber 9.

The polyacrylic acid binder applied to the fibers is conventional and comprise polyacrylic acids having glycerol and triethanolamines as crosslinking groups. Suitable binders are disclosed in U.S. Patent 6933349 entitled " Low Odor Insulation Binder from Phosphite Terminated Polyacrylic Acid" filed 3/21/01; U.S. Patent 7157524 entitled "Surfactant-Containing Insulation Binder" filed 5/31/01; U.S. Patent Number 6,194,512 entitled "Corrosion Inhibiting Composition for Polyacrylic Acid Based Binders" all of which are incorporated herein by reference. Binder is diluted to a preferred application viscosity with water to between approximately 3 to 25% solids.

A maleic acid or maleic anhydride co-binder may be optionally added to improve the performance of the polyacrylic acid binder and reduce the cost of the binder. The maleic acid or maleic anhydride cobinder also improves the overall stiffness and recovery of the final insulation product.

The fibers 9 are then introduced through a forming hoodwall 22 that confines the fibers 9. The walls 65 of the hoodwall comprise a continuous moving belt that contain the fibers 8 and binder and optional cobinder 18 within the forming hood. The fibers 9 are gathered onto a forming conveyor 24 by pulling a large volume of air across a series of perforated plates on the conveyor 24 using a forming fan 40. The fibers 9 form an uncured pack 16 on the forming conveyor 24. A drop out box 42 slows down the velocity of air between the conveyor 24 and forming fan 40 so that fibers 9 and binder and optional cobinder 18 droplets which pass through the forming conveyor 24 are substantially prevented from reaching the forming fan 40.

The walls 65 of the forming section are washed with a washwater solution 26 introduced from a washwater tank 32 through a pump 50 and inlet line 52 to application devices 28 that pack rinse walls 65 of the forming hoodwall 22 with the solution 26. The washwater solution 26 removes excess binder and optional cobinder 18 from the walls 65 of the forming hoodwall 22. The excess binder and optional cobinder 18 and washwater solution 26 is then removed from the forming hoodwall 22 is collected and returned to the washwater. The collected tank 32 polyacrylic acid and the optional maleic acid or maleic anhydride cobinder coated fiberglass pack 16 is then moved along the conveyor 24 to an oven (not shown) for subsequent curing and processing to form glass fiber insulation products. The method for forming the glass pack 16, introducing the binder and optional cobinder 18, and subsequent formation of fiberglass insulation products such as batts, rolls, blowing wool and board products from the pack 16 is well known in the art and not relevant to the present invention except as directed to the closed-loop washwater recovery system 12 that is the subject of the present invention.

The washwater solution 26 is also introduced separately via input lines 53, 55, 57, 59 to remove excess binder and optional cobinder 18 from the suction boxes 30, forming fan 40, drop out boxes 42, and forming hoodwall 22, respectively. This ensures clean surfaces and optimum performance for the equipment. The washwater solution 26 is then gathered from the boxes 30, 42, fan 40, forming hoodwall 22, and conveyor 24 into a washwater sump 44 via lines 46. The sump 44 pumps the washwater solution 26 and excess binder and optional cobinder 18 via outlet line 48 to a shaker screen 49, in which glass fibers and partially cured particles of binder and optional cobinder 18 are removed. The remaining solution 26 containing liquid binder and optional cobinder 18 is returned to a washwater tank 32 via line 54.

The washwater tank 32 contains one or more pH probes 60 that provide electrical feedback to a processor 63 of the neutralization system 62. When the pH probes 60 indicate that the pH of the washwater solution 26 is less than approximately 8.0 or 8.5, the processor 63 of the neutralization system 62 interprets an electrical signal from the pH probes 60 and directs the introduction of a base solution 64 into the washwater tank 32 through pump 67 from a holding tank 66 that is either contained within or coupled to the neutralization system 62. This ensures that washwater solution 26 pumped through the closed-loop washwater recovery system 12 is maintained at a pH that will not corrode the forming conveyor 24, suction boxes 30, forming fan 40, drop out boxes 42, duct work and environmental equipment (not shown).

Preferably, the base solution 64 comprises a weak acid/strong base salt that is soluble in water and can neutralize the washwater solution 26 without the production of insoluble salts. Further, the base solution should not buffer the washwater solution 26 to an extent that the washwater solution 26 may not be able to be removed from the washwater tank 32 and used to prepare phenolic binders. The base solution 64 may be solid sodium hydroxide or a solution of any available concentration, preferably a 50% by weight solution of sodium hydroxide dispersed in water. However, other hydroxide solutions may be used as the base solution 64 such as calcium hydroxide or ammonium hydroxide. However, calcium hydroxide has limited solubility in water and the insoluble salts tend to settle out and cause potential pluggage problems. Also, ammonium hydroxide releases ammonia, and therefore environmental concerns in terms of plant emissions would likely have to be addressed.

Further, other weak acid/strong base salts such as sodium bicarbonate can be used in the base solution 64. However, these salts are not preferred in that they will buffer the washwater solution 26 to an extent that the washwater solution 26 may not be able to be removed from the washwater tank 32 and used to prepare phenolic binders.

The reclaimed washwater solution 26 containing the binder 18 may be siphoned from the tank 32 through line 70 and placed into a binder/cobinder makeup tank 72. Here, the binder and optional cobinder 18 material may be recovered from the washwater solution 26 and reused in the application process. This can reduce binder and cobinder 18 costs, therein helping to minimize the manufacturing costs for making insulation products.

By maintaining the washwater at a pH in the range of about 8.0 to 8.5 or above, the corrosion rate of the equipment in the forming area may be minimized as compared with prior art systems utilizing a closed-loop washwater system without an associated neutralizing system 62.

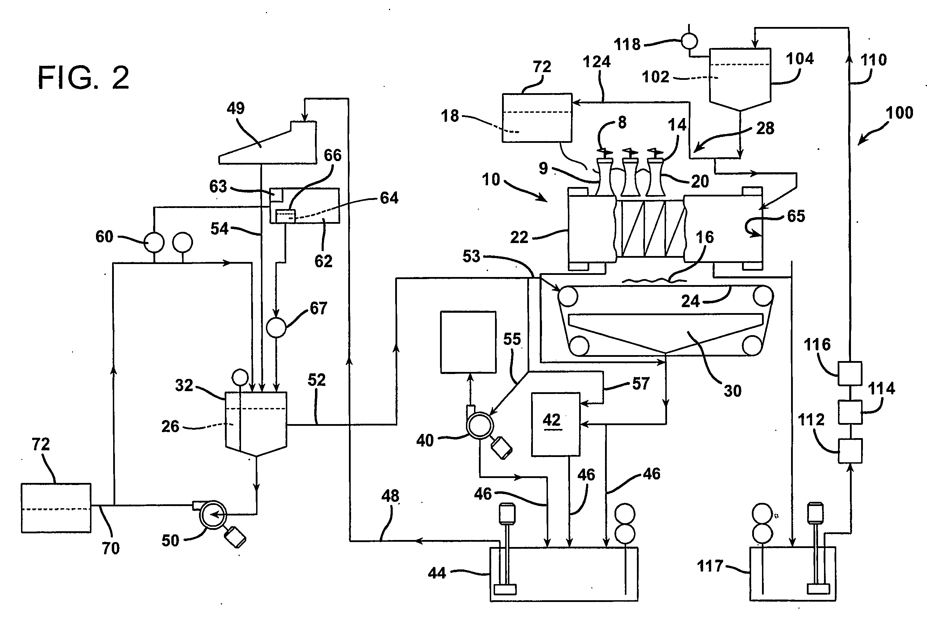

In another preferred embodiment, as shown in Figure 2, input line 59, which supplied washwater solution 26 to the walls 65 of the forming hoodwall 22 of Figure 1, is replaced with a closed-loop hoodwall washwater recovery system 100.

Referring now to Figure 2, washwater solution 102 is introduced from a hoodwall reclaim recirculation tank 104 of the system 100 through a line 106 to the walls 65 of the forming hoodwall 22 to remove excess binder and optional cobinder 18 that may have accumulated on the walls 106. The excess binder and optional cobinder 18 and washwater solution 102 is then returned to the tank 104 via pump 117 through line 110 after passing through a series of filters 112 or a shaker screen 114, or centrifuge 116, or a combination of all three as shown here. The filters 112, shaker screens 114, and/or centrifuge 116 removes glass fibers and suspended partially cured particles of binder and optional cobinder 18 from the washwater solution 102 prior to reintroduction to the recirculation tank 104. Water may be introduced by a pump 118 to the tank 104 to replace water lost in the process. All wetted parts of the hoodwall reclaim system 100 should be stainless steel or contain a corrosion resistant material.

The reclaimed washwater solution 102 containing the binder and optional cobinder 18 may be siphoned from the tank 104 through line 124 and placed into a binder makeup tank 72. As the binder and optional cobinder 18 is a water-based binder/optional cobinder as described above, the binder and cobinder 18 and washwater solution 102 may be reused in the application process. This can reduce binder and optional cobinder 18 costs, therein helping to minimize the manufacturing costs for making insulation products.

The addition of a second closed-loop hoodwall washwater recovery system 100 offers advantages as compared with Figure 1. For example, the second system 100 increases the amount of recoverable binder 18. Further, the binder and optional cobinder 18 recovered is substantially free of the base solution 64. This is important because the base solution 64 adversely affects the curing of reclaimed binder and optional cobinder 18 used in glass fiber products if the base 64 is not removed.

Further, by minimizing the amount of base solution 64 in the pack 16, the amount of polyacrylic acid salt contained in the finished insulation product made from the pack 16 is also minimized. This is important because the polyacrylic acid salt increases the potential for water absorption within the finished insulation product, water absorption which can lead to an increase in degradation of the insulation properties of the finished insulated product during storage and subsequent use.

## Claims

1. A method for reducing acid corrosion of the surfaces of equipment used to form polyacrylic acid bound fibers having a polyacrylic acid binder and a maleic acid cobinder or a maleic anhydride cobinder, the method comprising the step of:
introducing a quantity of a base to raise the pH of a washwater solution to at least about 8. 5 when the pH of said quantity of a washwater system as determined by said neutralization system is below approximately 8. 5.

2. The method of claim 1, wherein introducing a quantity of base comprises the step of mixing a base solution from a hydroxide that is soluble in water and will form a weakacid/strong base salt.

3. The method of claim 1, wherein introducing a quantity of base comprises introducing a quantity of a hydroxide.

4. The method of claim 3, wherein the hydroxide is an aqueous sodium hydroxide solution.

5. The method of claim 3, wherein the hydroxide solution is a 50% by weight solution of sodium hydroxide in water.

6. The method of claim 3, wherein the hydroxide is a solid.

7. The method of claim 1 for reducing acid corrosion of the surfaces of equipment used to form polyacrylic acid bound fibers having a polyacrylic acid binder and a maleic acid cobinder or maleic anhydride co-binder (18) bound to a glass fiber surface, the method comprising:
coupling a neutralization system (62) to a washwater tank (32) of a closed-loop washwater system (12) having a quantity of washwater solution (26), wherein said quantity of washwater solution is used to remove an excess of the polyacrylic acid binder from the surfaces of the equipment;
determining the pH of said quantity of washwater solution using said neutralization system; and
introducing a quantity of base solution (64) from a holding tank (66) of said neutralization system sufficient to raise the pH of said washwater solution to at least about 8.5 when the pH of said quantity of washwater system as determined by said neutralization system is below about 8.5.

8. The method of claim 7, wherein determining the pH and introducing a quantity of base solution comprises:
coupling at least one pH probe (60) of said neutralization system within said washwater tank, wherein said at least one pH probe is electrically coupled to said neutralization system;
determining the pH of said quantity of washwater solution within said washwater tank using said at least one pH probe;
directing an electrical signal from said at least one pH probe to said neutralization system, said electrical signal representing the pH of said quantity of washwater solution;
and introducing a quantity of base solution from a holding tank of said neutralization system as a function of said electrical signal, said quantity of base solution sufficient to raise the pH of said washwater solution to at least about 8.5.

9. The method of claim 8, wherein introducing a quantity of base solution comprises introducing a quantity of a hydroxide solution from a holding tank of said neutralization system as a function of said electrical signal, said quantity of hydroxide solution sufficient to raise the pH of said washwater solution to at least about 8.5.

10. The method of claim 9, wherein introducing a quantity of hydroxide solution comprises introducing a quantity of a sodium hydroxide solution from a holding tank of said neutralization system as a function of said electrical signal, said quantity of sodium hydroxide solution sufficient to raise the pH of said washwater solution to about least about 8.5.

11. The method of claim 9, wherein introducing a quantity of hydroxide solution comprises introducing a quantity of a 50% by weight solution of sodium hydroxide in water from a holding tank of said neutralization system as a function of said electrical signal, said quantity of said 50% by weight solution of sodium hydroxide in water sufficient to raise the pH of said washwater solution to at least about 8.5.

12. The method of claim 7 for reducing acid corrosion of the equipment used to form polyacrylic acid coated fibers, the method comprising:
coupling a neutralization system (62) to a washwater tank (32) of a closed-loop washwater system (12) having a quantity of washwater solution (26), wherein said quantity of washwater solution is used to remove an excess of the polyacrylic acid binder from the surfaces of the equipment;
determining the pH of said quantity of washwater solution using said neutralization system;
introducing a quantity of base solution (64) from a holding tank (66) of said neutralization system sufficient to raise the pH of said washwater solution to at least about 8.5 when the pH of said quantity of washwater system as determined by said neutralization system is below about 8. 5; and
coupling a closed loop hoodwall washwater recovery system (100) to a forming hoodwall (22) of the equipment, said closed loop hoodwall washwater recovery system capable of introducing a quantity of a second washwater solution (102) to remove excess polyacrylic acid binder and maleic acid cobinder or maleic anhydride cobinder (18) from at least one wall (65) of said forming hoodwall.

13. The method of claim 12 further comprising fluid coupling said closed loop hoodwall washwater recovery system to a binder makeup tank (72), said binder makeup tank used to supply the polyacrylic acid binder and maleic acid cobinder or maleic anhydride cobinder to the glass forming equipment.

14. The method of claim 12 further comprising fluid coupling a binder makeup tank to said washwater tank, said binder makeup tank used to supply the polyacrylic acid binder and maleic acid cobinder or maleic anhydride cobinder to the glass forming equipment.

15. The method of claim 12, wherein determining the pH and introducing a quantity of base solution comprises:
coupling at least one pH probe (60) of said neutralization system within said washwater tank, wherein said at least one pH probe is electrically coupled to said neutralization system;
determining the pH of said quantity of washwater solution within said washwater tank using said at least one pH probe;
directing an electrical signal from said at least one pH probe to said neutralization system, said electrical signal representing the pH of said quantity of washwater solution; and
introducing a quantity of base solution from a holding tank of said neutralization system as a function of said electrical signal, said quantity of base solution sufficient to raise the pH of said washwater solution to at least about 8. 5.

16. The method of claim 12, wherein introducing a quantity of base solution comprises introducing a quantity of a hydroxide solution from a holding tank of said neutralization system as a function of said electrical signal, said quantity of hydroxide solution sufficient to raise the pH of said washwater solution to at least about 8.5.

17. The method of claim 16, wherein introducing a quantity of hydroxide solution comprises introducing a quantity of a sodium hydroxide solution from a holding tank of said neutralization system as a function of said electrical signal, said quantity of sodium hydroxide solution sufficient to raise the pH of said washwater solution to at least about 8. 5.

18. The method of claim 16, wherein introducing a quantity of hydroxide solution comprises introducing a quantity of a 50% by weight solution of sodium hydroxide in water from a holding tank of said neutralization system as a function of said electrical signal, said quantity of said50% by weight solution of sodium hydroxide in water sufficient to raise the pH of said washwater solution to at least about approximately 8.5.

19. A glass forming line (10) having a closed loop washwater recovery system (12), said closed loop washwater recovery system used to remove excess binder and cobinder (18) from equipment used in forming a glass fiber, the closed loop washwater recovery system comprising:
a washwater tank (32) fluidically coupled to the equipment, said washwater tank having a quantity of washwater solution (26);
at least one pH probe (60) positioned within said washwater tank capable of measuring the pH of said quantity of washwater solution within said washwater tank;
a neutralization system (62) electrically coupled to said at least one pH probe, said neutralization system having a processor(63) and a holding tank (66), said holding tank having a quantity of base solution (64),
wherein said processor can interpret an electrical signal from said at least one pH probe representing the pH of said quantity of washwater solution and direct a quantity of said base solution from said holding tank to said washwater tank when the pH of said washwater solution as interpreted by said processor is a predetermined pH.

20. The glass forming line of claim 19, wherein said pH of said washwater solution as interpreted by said processor is less than about 8.5.

21. The glass forming line of claim 19, wherein said base solution comprises a hydroxide base that is soluble in water and will form and neutralize said washwater solution without the production of insoluble salts.

22. The glass forming line of claim 19, wherein said base solution comprises a hydroxide solution selected from the group comprising a sodium hydroxide solution, a calcium hydroxide solution or an ammonium hydroxide solution.

23. The glass forming line of claim 22, wherein said hydroxide solution comprises an approximately 50% by weight hydroxide solution in water.

24. The glass forming line of claim 19, further comprising a closed-loop hoodwall washwater recovery system (100) coupled to a forming hoodwall (22) of the equipment.

25. The glass forming line of claim 24, wherein said closed-loop hoodwall recovery system comprises a hoodwall reclaim recirculation tank (104) fluidically coupled to said forming hoodwall, said hoodwall reclaim recirculation tank having a quantity of a second washwater solution (102), said second washwater solution used to wash at least one wall (65) of said forming hoodwall.

26. The glass forming line of claim 24, wherein said closed-loop hoodwall washwater recovery system is coupled to a binder makeup tank (72).

27. The glass forming line of claim 19, wherein said washwater tank is coupled to a binder makeup tank.

28. The glass forming line of claim 19 having a closed loop washwater recovery system (12), said closed loop washwater recovery system used to remove excess binder (18) from equipment used in forming a glass fiber, the closed loop washwater recovery system comprising:
a washwater tank (32) fluidically coupled to the equipment, said washwater tank having a quantity of washwater solution (26);
at least one pH probe (60) positioned within said washwater tank capable of measuring the pH of said quantity of washwater solution within said washwater tank;
a neutralization system (62) electrically coupled to said at least one pH probe, said neutralization system having a processor (63) and a holding tank (66), said holding tank having a quantity of base solution (64),
wherein said processor can interpret an electrical signal from said at least one pH probe representing the pH of said quantity of washwater solution and direct a quantity of said base solution from said holding tank to said washwater tank when the pH of said washwater solution as interpreted by said processor is less than approximately 8.0.

29. The glass forming line of claim 28, wherein said base solution comprises a hydroxide base that is soluble in water and will form and neutralize said washwater solution without the production of insoluble salts.

30. The glass forming line of claim 28, wherein said base solution comprises a hydroxide solution selected from the group comprising a sodium hydroxide solution, a calcium hydroxide solution or an ammonium hydroxide solution.

31. The glass forming line of claim 30, wherein said hydroxide solution comprises an approximately 50% by weight hydroxide solution in water.

32. The glass forming line of claim 28, further comprising a closed-loop hoodwall washwater recovery system (100) coupled to a forming hoodwall (22) of the equipment.

33. The glass forming line of claim 32, wherein said closed-loop hoodwall recovery system comprises a hoodwall reclaim recirculation tank (104) fluidically coupled to said forming hoodwall, said hoodwall reclaim recirculation tank having a quantity of a second washwater solution (102), said second washwater solution used to wash at least one wall (65) of said forming hoodwall.

34. The glass forming line of claim 32, wherein said closed-loop hoodwall washwater recovery system is coupled to a binder makeup tank (72).

35. The glass forming line of claim 28, wherein said washwater tank is coupled to a binder makeup tank.

36. The method of claim 7 for reducing acid corrosion of the surfaces of equipment used to form polyacrylic acid bound fibers having a polyacrylic acid binder bound to a glass fiber surface, the method comprising:
coupling a neutralization system (62) to a washwater tank (32) of a closed-loop washwater system (12) having a quantity of washwater solution (26), wherein said quantity of washwater solution is used to remove an excess of the polyacrylic acid binder (18) from the surfaces of the equipment;
determining the pH of said quantity of washwater solution using said neutralization system; and
introducing a quantity of base solution (64) from a holding tank (62) of said neutralization system sufficient to raise the pH of said washwater solution above approximately 8.0 when the pH of said quantity of washwater system as determined by said neutralization system is below approximately 8.0.

37. The method of claim 36, wherein determining the pH and introducing a quantity of base solution comprises:
coupling at least one pH probe (60) of said neutralization system within said washwater tank, wherein said at least one pH probe is electrically coupled to said neutralization system; determining the pH of said quantity of washwater solution within said washwater tank using said at least one pH probe; directing an electrical signal from said at least one pH probe to said neutralization system, said electrical signal representing the pH of said quantity of washwater solution; and introducing a quantity of base solution from a holding tank of said neutralization system as a function of said electrical signal, said quantity of base solution sufficient to raise the pH of said washwater solution above approximately 8.0.

38. The method of claim 37, wherein introducing a quantity of base solution comprises introducing a quantity of a hydroxide solution from a holding tank of said neutralization system as a function of said electrical signal, said quantity of hydroxide solution sufficient to raise the pH of said washwater solution above approximately 8.0.

39. The method of claim 38, wherein introducing a quantity of hydroxide solution comprises introducing a quantity of a sodium hydroxide solution from a holding tank of said neutralization system as a function of said electrical signal, said quantity of sodium hydroxide solution sufficient to raise the pH of said washwater solution above approximately 8. 0.

40. The method of claim 38, wherein introducing a quantity of hydroxide solution comprises introducing a quantity of a 50% by weight solution of sodium hydroxide in water from a holding tank of said neutralization system as a function of said electrical signal, said quantity of said 50% by weight solution of sodium hydroxide in water sufficient to raise the pH of said washwater solution above approximately 8.0.

41. The method for reducing acid corrosion of the equipment used to form polyacrylic acid coated fibers, the method comprising:
coupling a neutralization system (62) to a washwater tank (32) of a closed-loop washwater system (12) having a quantity of washwater solution (26), wherein said quantity of washwater solution is used to remove an excess of the polyacrylic acid binder (18) from the surfaces of the equipment;
determining the pH of said quantity of washwater solution using said neutralization system;
introducing a quantity of base solution (64) from a holding tank (66) of said neutralization system sufficient to raise the pH of said washwater solution above approximately 8. 0 when the pH of said quantity of washwater system as determined by said neutralization system is below approximately 8.0 ; and
coupling a closed loop hoodwall washwater recovery system (100) to a forming hoodwall (22) of the equipment, said closed loop hoodwall washwater recovery system capable of introducing a quantity of a second washwater solution (102) to remove excess polyacrylic acid binder from at least one wall (65) of said forming hoodwall.

42. The method of claim 41 further comprising fluid coupling said closed loop hoodwall washwater recovery system to a binder makeup tank (72), said binder makeup tank used to supply the polyacrylic acid binder to the glass forming equipment.

43. The method of claim 41 further comprising fluid coupling said to a binder makeup tank to said washwater tank, said binder makeup tank used to supply the polyacrylic acid binder to the glass forming equipment.

44. The method of claim 41, wherein determining the pH and introducing a quantity of base solution comprises: coupling at least one pH probe (60) of said neutralization system within said washwater tank, wherein said at least one pH probe is electrically coupled to said neutralization system; determining the pH of said quantity of washwater solution within said washwater tank using said at least one pH probe ; directing an electrical signal from said at least one pH probe to said neutralization system, said electrical signal representing the pH of said quantity of washwater solution; and introducing a quantity of base solution from a holding tank of said neutralization system as a function of said electrical signal, said quantity of base solution sufficient to raise the pH of said washwater solution above approximately 8.0.

45. The method of claim 41, wherein introducing a quantity of base solution comprises introducing a quantity of a hydroxide solution from a holding tank of said neutralization system as a function of said electrical signal, said quantity of hydroxide solution sufficient to raise the pH of said washwater solution above approximately 8.0.

46. The method of claim 45, wherein introducing a quantity of hydroxide solution comprises introducing a quantity of a sodium hydroxide solution from a holding tank of said neutralization system as a function of said electrical signal, said quantity of sodium hydroxide solution sufficient to raise the pH of said washwater solution above approximately 8.0.

47. The method of claim 45, wherein introducing a quantity of hydroxide solution comprises introducing a quantity of a 50% by weight solution of sodium hydroxide in water from a holding tank of said neutralization system as a function of said electrical signal, said quantity of said 50% by weight solution of sodium hydroxide in water sufficient to raise the pH of said washwater solution above approximately 8.0.

48. A method for reducing acid corrosion of the surfaces of equipment used to form polyacrylic acid bound fibers having a polyacrylic acid binder, the method comprising the step of:
introducing a quantity of a base to raise the pH of a washwater solution above approximately 8.0 when the pH of said quantity of a washwater system as determined by said neutralization system is below approximately 8.0.

49. The method of claim 48, wherein introducing a quantity of base comprises the step of mixing a base solution from a hydroxide that is soluble in water and will form a weak acid/strong base salt.

50. The method of claim 48, wherein introducing a quantity of base comprises introducing a quantity of a hydroxide.

51. The method of claim 50, wherein the hydroxide is an aqueous sodium hydroxide solution.

52. The method of claim51, wherein the hydroxide solution is a 50% by weight solution of sodium hydroxide in water.

53. The method of claim51, wherein the hydroxide is a solid.

## Patentansprüche

1. Verfahren zur Verringerung der Säurekorrosion der Oberflächen von Geräten, die zur Erzeugung Polyacrylsäure gebundener Fasern mit einem Polyacrylsäurebindemittel und einem Maleinsäure-Co-Bindemittel oder einem Maleinsäureanhydrid-Co-Bindemittel verwendet werden,
wobei das Verfahren den folgenden Schritt umfasst:
Einleiten einer Menge einer Base zur Erhöhung des pH-Wertes einer Waschwasserlösung auf mindestens etwa 8,5, wenn der pH-Wert der Menge eines Waschwassersystems, wie durch das Neutralisierungssystem bestimmt, unter etwa 8,5 liegt.

2. Verfahren nach Anspruch 1, wobei das Einleiten einer Menge einer Base den Schritt des Mischens einer Basenlösung von einem Hydroxid umfasst, das in Wasser löslich ist und ein schwache Säure/starke Base-Salz bildet.

3. Verfahren nach Anspruch 1, wobei das Einleiten einer Menge einer Base das Einleiten einer Menge eines Hydroxids umfasst.

4. Verfahren nach Anspruch 3, wobei das Hydroxid eine wässerige Natriumhydroxidlösung ist.

5. Verfahren nach Anspruch 3, wobei die Hydroxidlösung eine 50 Gewichtsprozent Lösung von Natriumhydroxid in Wasser ist.

6. Verfahren nach Anspruch 3, wobei das Hydroxid ein Feststoff ist.

7. Verfahren nach Anspruch 1 zur Verringerung der Säurekorrosion der Oberflächen von Geräten, die zur Erzeugung Polyacrylsäure gebundener Fasern verwendet werden, wobei ein Polyacrylsäurebindemittel und ein Maleinsäure-Co-Bindemittel oder ein Maleinsäureanhydrid-Co-Bindemittel (18) an eine Glasfaseroberfläche gebunden ist, wobei das Verfahren umfasst:
das Koppeln eines Neutralisierungssystems (62) an einen Waschwassertank (32) eines geschlossenen Waschwassersystems (12), der eine Menge an Waschwasserlösung (26) enthält, wobei die Menge an Waschwasserlösung zur Entfernung eines Überschusses des Polyacrylsäurebindemittels von den Oberflächen der Geräte verwendet wird;
das Bestimmen des pH-Wertes der Menge an Waschwasserlösung unter Verwendung des Neutralisierungssystems; und
das Einleiten einer ausreichenden Menge an Basenlösung (64) von einem Speichertank (66) des Neutralisierungssystems, um den pH-Wert der Waschwasserlösung auf mindestens etwa 8,5 zu erhöhen, wenn der pH-Wert der Menge des Waschwassersystems, wie durch das Neutralisierungssystem bestimmt, unter etwa 8,5 liegt.

8. Verfahren nach Anspruch 7, wobei die Bestimmung des pH-Wertes und das Einleiten einer Menge an Basenlösung umfasst:
das Koppeln mindestens einer pH-Sonde (60) des Neutralisierungssystems in dem Waschwassertank, wobei die mindestens eine pH-Sonde elektrisch an das Neutralisierungssystem gekoppelt ist;
das Bestimmen des pH-Wertes der Menge an Waschwasserlösung in dem Waschwassertank unter Verwendung der mindestens einen pH-Sonde;
das Leiten eines elektrischen Signals von der mindestens einen pH-Sonde zu dem Neutralisierungssystem, wobei das elektrische Signal den pH-Wert der Menge an Waschwasserlösung darstellt; und
das Einleiten einer Menge an Basenlösung von einem Speichertank des Neutralisierungssystems als eine Funktion des elektrischen Signals, wobei die Menge an Basenlösung ausreicht, um den pH-Wert der Waschwasserlösung auf mindestens etwa 8,5 zu erhöhen.

9. Verfahren nach Anspruch 8, wobei das Einleiten einer Menge an Basenlösung das Einleiten einer Menge einer Hydroxidlösung von einem Speichertank des Neutralisierungssystems als eine Funktion des elektrischen Signals umfasst, wobei die Menge an Hydroxidlösung ausreicht, um den pH-Wert der Waschwasserlösung auf mindestens etwa 8,5 zu erhöhen.

10. Verfahren nach Anspruch 9, wobei das Einleiten einer Menge an Hydroxidlösung das Einleiten einer Menge einer Natriumhydroxidlösung von einem Speichertank des Neutralisierungssystems als eine Funktion des elektrischen Signals umfasst, wobei die Menge an Natriumhydroxidlösung ausreicht, um den pH-Wert der Waschwasserlösung auf mindestens etwa 8,5 zu erhöhen.

11. Verfahren nach Anspruch 9, wobei das Einleiten einer Menge an Hydroxidlösung das Einleiten einer Menge einer 50 Gewichtsprozent Lösung von Natriumhydroxid in Wasser von einem Speichertank des Neutralisierungssystems als eine Funktion des elektrischen Signals umfasst, wobei die Menge der 50 Gewichtsprozent Lösung von Natriumhydroxid in Wasser ausreicht, um den pH-Wert der Waschwasserlösung auf mindestens etwa 8,5 zu erhöhen.

12. Verfahren nach Anspruch 7 zur Verringerung der Säurekorrosion der Geräte, die zur Erzeugung Polyacrylsäure beschichteter Fasern verwendet werden, wobei das Verfahren umfasst:
das Koppeln eines Neutralisierungssystems (62) an einen Waschwassertank (32) eines geschlossenen Waschwassersystems (12), der eine Menge an Waschwasserlösung (26) enthält, wobei die Menge an Waschwasserlösung zur Entfernung eines Überschusses des Polyacrylsäurebindemittels von den Oberflächen der Geräte verwendet wird;
das Bestimmen des pH-Wertes der Menge an Waschwasserlösung unter Verwendung des Neutralisierungssystems;
das Einleiten einer ausreichenden Menge an Basenlösung (64) von einem Speichertank (66) des Neutralisierungssystems, um den pH-Wert der Waschwasserlösung auf mindestens etwa 8,5 zu erhöhen, wenn der pH-Wert der Menge an Waschwassersystem, wie durch das Neutralisierungssystem bestimmt, unter etwa 8,5 liegt; und
das Koppeln eines geschlossenen Haubenwand-Waschwasseraufbereitungssystems (100) an eine Form gebende Haubenwand (22) des Geräts, wobei das geschlossene Haubenwand-Waschwasseraufbereitungssystem imstande ist, eine Menge einer zweiten Waschwasserlösung (102) einzuleiten, um überschüssiges Polyacrylsäurebindemittel und Maleinsäure-Co-Bindemittel oder Maleinsäureanhydrid-Co-Bindemittel (18) von mindestens einer Wand (65) der Form gebenden Haubenwand zu entfernen.

13. Verfahren nach Anspruch 12, des Weiteren umfassend eine strömungstechnische Kopplung des geschlossenen Haubenwand-Waschwasseraufbereitungssystems an einen Bindemittelansatzbehälter (72), wobei der Bindemittelansatzbehälter zum Zuleiten des Polyacrylsäurebindemittels und Maleinsäure-Co-Bindemittels oder Maleinsäureanhydrid-Co-Bindemittels zu den Glaserzeugungsgeräten verwendet wird.

14. Verfahren nach Anspruch 12, des Weiteren umfassend eine strömungstechnische Kopplung eines Bindemittelansatzbehälters an den Waschwassertank, wobei der Bindemittelansatzbehälter zum Zuleiten des Polyacrylsäurebindemittels und Maleinsäure-Co-Bindemittels oder Maleinsäureanhydrid-Co-Bindemittels zu den Glaserzeugungsgeräten verwendet wird.

15. Verfahren nach Anspruch 12, wobei die Bestimmung des pH-Wertes und das Einleiten einer Menge an Basenlösung umfasst:
das Koppeln mindestens einer pH-Sonde (60) des Neutralisierungssystems in dem Waschwassertank, wobei die mindestens eine pH-Sonde elektrisch an das Neutralisierungssystem gekoppelt ist;
das Bestimmen des pH-Wertes der Menge an Waschwasserlösung in dem Waschwassertank unter Verwendung der mindestens einen pH-Sonde;
das Leiten eines elektrischen Signals von der mindestens einen pH-Sonde zu dem Neutralisierungssystem, wobei das elektrische Signal den pH-Wert der Menge an Waschwasserlösung darstellt; und
das Einleiten einer Menge an Basenlösung von einem Speichertank des Neutralisierungssystems als eine Funktion des elektrischen Signals, wobei die Menge an Basenlösung ausreicht, um den pH-Wert der Waschwasserlösung auf mindestens etwa 8,5 zu erhöhen.

16. Verfahren nach Anspruch 12, wobei das Einleiten einer Menge an Basenlösung das Einleiten einer Menge einer Hydroxidlösung von einem Speichertank des Neutralisierungssystems als eine Funktion des elektrischen Signals umfasst, wobei die Menge an Hydroxidlösung ausreicht, um den pH-Wert der Waschwasserlösung auf mindestens etwa 8,5 zu erhöhen.

17. Verfahren nach Anspruch 16, wobei das Einleiten einer Menge an Hydroxidlösung das Einleiten einer Menge einer Natriumhydroxidlösung von einem Speichertank des Neutralisierungssystems als eine Funktion des elektrischen Signals umfasst, wobei die Menge an Natriumhydroxidlösung ausreicht, um den pH-Wert der Waschwasserlösung auf mindestens etwa 8,5 zu erhöhen.

18. Verfahren nach Anspruch 16, wobei das Einleiten einer Menge an Hydroxidlösung das Einleiten einer Menge einer 50 Gewichtsprozent Lösung von Natriumhydroxid in Wasser von einem Speichertank des Neutralisierungssystems als eine Funktion des elektrischen Signals umfasst, wobei die Menge der 50 Gewichtsprozent Lösung von Natriumhydroxid in Wasser ausreicht, um den pH-Wert der Waschwasserlösung auf mindestens etwa 8,5 zu erhöhen.

19. Glaserzeugungsanlage (10) mit einem geschlossenen Waschwasseraufbereitungssystem (12), wobei das geschlossene Waschwasseraufbereitungssystem zur Entfernung überschüssigen Bindemittels und Co-Bindemittels (18) von Geräten verwendet wird, die zur Erzeugung einer Glasfaser verwendet werden, wobei das geschlossene Waschwasseraufbereitungssystem umfasst:
einen Waschwassertank (32) der strömungstechnisch an die Geräte gekoppelt ist, wobei der Waschwassertank eine Menge an Waschwasserlösung (26) enthält;
mindestens eine pH-Sonde (60), die in dem Waschwassertank positioniert ist, die imstande ist, den pH-Wert der Menge an Waschwasserlösung in dem Waschwassertank zu messen;
ein Neutralisierungssystem (62), das elektrisch an die mindestens eine pH-Sonde gekoppelt ist, wobei das Neutralisierungssystem einen Prozessor (63) und einen Speichertank (66) aufweist, wobei der Speichertank eine Menge an Basenlösung (64) enthält;
wobei der Prozessor ein elektrisches Signal von der mindestens einen pH-Sonde interpretieren kann, das den pH-Wert der Menge an Waschwasserlösung darstellt, und eine Menge der Basenlösung von dem Speichertank zu dem Waschwassertank lenken kann, wenn der pH-Wert der Waschwasserlösung, der von dem Prozessor interpretiert wird, ein vorbestimmter pH-Wert ist.

20. Glaserzeugungsanlage nach Anspruch 19, wobei der pH-Wert der Waschwasserlösung, der von dem Prozessor interpretiert wird, kleiner als etwa 8,5 ist.

21. Glaserzeugungsanlage nach Anspruch 19, wobei die Basenlösung eine Hydroxidbase umfasst, die in Wasser löslich ist und die Waschwasserlösung ohne Bildung unlöslicher Salze bildet und neutralisiert.

22. Glaserzeugungsanlage nach Anspruch 19, wobei die Basenlösung eine Hydroxidlösung umfasst, die ausgewählt ist aus der Gruppe bestehend aus einer Natriumhydroxidlösung, einer Kalziumhydroxidlösung oder einer Ammoniumhydroxidlösung.

23. Glaserzeugungsanlage nach Anspruch 22, wobei die Hydroxidlösung eine etwa 50 Gewichtsprozent Hydroxidlösung in Wasser umfasst.

24. Glaserzeugungsanlage nach Anspruch 19, des Weiteren umfassend ein geschlossenes Haubenwand-Waschwasseraufbereitungssystem (100), das an eine Form gebende Haubenwand (22) des Geräts gekoppelt ist.

25. Glaserzeugungsanlage nach Anspruch 24, wobei das geschlossene Haubenwand-Waschwasseraufbereitungssystem (100) einen Haubenwand-Regenerations-Rezirkulationstank (104) umfasst, der strömungstechnisch an die Form gebende Haubenwand gekoppelt ist, wobei der Haubenwand-Regenerations-Rezirkulationstank eine Menge einer zweiten Waschwasserlösung (102) enthält, wobei die zweite Waschwasserlösung zum Waschen mindestens einer Wand (65) der Form gebenden Haubenwand verwendet wird.

26. Glaserzeugungsanlage nach Anspruch 24, wobei das geschlossene Haubenwand-Waschwasseraufbereitungssystem an einen Bindemittelansatzbehälter (72) gekoppelt ist.

27. Glaserzeugungsanlage nach Anspruch 19, wobei der Waschwassertank an einen Bindemittelansatzbehälter gekoppelt ist.

28. Glaserzeugungsanlage nach Anspruch 19 mit einem geschlossenen Waschwasseraufbereitungssystem (12), wobei das geschlossene Waschwasseraufbereitungssystem zur Entfernung überschüssigen Bindemittels (18) von Geräten verwendet wird, die zur Erzeugung einer Glasfaser verwendet werden, wobei das geschlossene Waschwasseraufbereitungssystem umfasst:
einen Waschwassertank (32), der strömungstechnisch an die Geräte gekoppelt ist, wobei der Waschwassertank eine Menge an Waschwasserlösung (26) enthält;
mindestens eine pH-Sonde (60), die in dem Waschwassertank positioniert ist, die imstande ist, den pH-Wert der Menge an Waschwasserlösung in dem Waschwassertank zu messen;
ein Neutralisierungssystem (62), das elektrisch an die mindestens eine pH-Sonde gekoppelt ist, wobei das Neutralisierungssystem einen Prozessor (63) und einen Speichertank (66) aufweist, wobei der Speichertank eine Menge an Basenlösung (64) enthält;
wobei der Prozessor ein elektrisches Signal von der mindestens einen pH-Sonde interpretieren kann, das den pH-Wert der Menge an Waschwasserlösung darstellt, und eine Menge der Basenlösung von dem Speichertank zu dem Waschwassertank lenken kann, wenn der pH-Wert der Waschwasserlösung, der von dem Prozessor interpretiert wird, geringer als etwa 8,0 ist.

29. Glaserzeugungsanlage nach Anspruch 28, wobei die Basenlösung eine Hydroxidbase umfasst, die in Wasser löslich ist und die Waschwasserlösung ohne Bildung unlöslicher Salze bildet und neutralisiert.

30. Glaserzeugungsanlage nach Anspruch 28, wobei die Basenlösung eine Hydroxidlösung umfasst, die ausgewählt ist aus der Gruppe bestehend aus einer Natriumhydroxidlösung, einer Kalziumhydroxidlösung oder einer Ammoniumhydroxidlösung.

31. Glaserzeugungsanlage nach Anspruch 30, wobei die Hydroxidlösung eine etwa 50 Gewichtsprozent Hydroxidlösung in Wasser umfasst.

32. Glaserzeugungsanlage nach Anspruch 28, des Weiteren umfassend ein geschlossenes Haubenwand-Waschwasseraufbereitungssystem (100), das an eine Form gebende Haubenwand (22) des Geräts gekoppelt ist.

33. Glaserzeugungsanlage nach Anspruch 32, wobei das geschlossene Haubenwand-Waschwasseraufbereitungssystem (100) einen Haubenwand-Regenerations-Rezirkulationstank (104) umfasst, der strömungstechnisch an die Form gebende Haubenwand gekoppelt ist, wobei der Haubenwand-Regenerations-Rezirkulationstank eine Menge einer zweiten Waschwasserlösung (102) enthält, wobei die zweite Waschwasserlösung zum Waschen mindestens einer Wand (65) der Form gebenden Haubenwand verwendet wird.

34. Glaserzeugungsanlage nach Anspruch 32, wobei das geschlossene Haubenwand-Waschwasseraufbereitungssystem (100) an einen Bindemittelansatzbehälter (72) gekoppelt ist.

35. Glaserzeugungsanlage nach Anspruch 28, wobei der Waschwassertank an einen Bindemittelansatzbehälter gekoppelt ist.

36. Verfahren nach Anspruch 7 zur Verringerung der Säurekorrosion der Oberflächen von Geräten, die zur Erzeugung Polyacrylsäure gebundener Fasern verwendet werden, wobei ein Polyacrylsäurebindemittel an eine Glasfaseroberfläche gebunden ist, wobei das Verfahren umfasst:
das Koppeln eines Neutralisierungssystems (62) an einen Waschwassertank (32) eines geschlossenen Waschwassersystems (12), der eine Menge an Waschwasserlösung (26) enthält, wobei die Menge an Waschwasserlösung zur Entfernung eines Überschusses des Polyacrylsäurebindemittels (18) von den Oberflächen der Geräte verwendet wird;
das Bestimmen des pH-Wertes der Menge an Waschwasserlösung unter Verwendung des Neutralisierungssystems; und
das Einleiten einer ausreichenden Menge an Basenlösung (64) von einem Speichertank (66) des Neutralisierungssystems, um den pH-Wert der Waschwasserlösung über etwa 8,0 zu erhöhen, wenn der pH-Wert der Menge des Waschwassersystems, wie durch das Neutralisierungssystem bestimmt, unter etwa 8,0 liegt.

37. Verfahren nach Anspruch 36, wobei die Bestimmung des pH-Wertes und das Einleiten einer Menge an Basenlösung umfasst:
das Koppeln mindestens einer pH-Sonde (60) des Neutralisierungssystems in dem Waschwassertank, wobei die mindestens eine pH-Sonde elektrisch an das Neutralisierungssystem gekoppelt ist;
das Bestimmen des pH-Wertes der Menge an Waschwasserlösung in dem Waschwassertank unter Verwendung der mindestens einen pH-Sonde;
das Leiten eines elektrischen Signals von der mindestens einen pH-Sonde zu dem Neutralisierungssystem, wobei das elektrische Signal den pH-Wert der Menge an Waschwasserlösung darstellt; und
das Einleiten einer Menge an Basenlösung von einem Speichertank des Neutralisierungssystems als eine Funktion des elektrischen Signals, wobei die Menge an Basenlösung ausreicht, um den pH-Wert der Waschwasserlösung über etwa 8,0 zu erhöhen.

38. Verfahren nach Anspruch 37, wobei das Einleiten einer Menge an Basenlösung das Einleiten einer Menge einer Hydroxidlösung von einem Speichertank des Neutralisierungssystems als eine Funktion des elektrischen Signals umfasst, wobei die Menge an Hydroxidlösung ausreicht, um den pH-Wert der Waschwasserlösung über etwa 8,0 zu erhöhen.

39. Verfahren nach Anspruch 38, wobei das Einleiten einer Menge an Hydroxidlösung das Einleiten einer Menge einer Natriumhydroxidlösung von einem Speichertank des Neutralisierungssystems als eine Funktion des elektrischen Signals umfasst, wobei die Menge an Natriumhydroxidlösung ausreicht, um den pH-Wert der Waschwasserlösung über etwa 8,0 zu erhöhen.

40. Verfahren nach Anspruch 38, wobei das Einleiten einer Menge an Hydroxidlösung das Einleiten einer Menge einer 50 Gewichtsprozent Lösung von Natriumhydroxid in Wasser von einem Speichertank des Neutralisierungssystems als eine Funktion des elektrischen Signals umfasst, wobei die Menge der 50 Gewichtsprozent Lösung von Natriumhydroxid in Wasser ausreicht, um den pH-Wert der Waschwasserlösung über etwa 8,0 zu erhöhen.

41. Verfahren zur Verringerung der Säurekorrosion von Geräten, die zur Erzeugung von Polyacrylsäure beschichteten Fasern verwendet werden, wobei das Verfahren umfasst:
das Koppeln eines Neutralisierungssystems (62) an einen Waschwassertank (32) eines geschlossenen Waschwassersystems (12), der eine Menge an Waschwasserlösung (26) enthält, wobei die Menge an Waschwasserlösung zur Entfernung eines Überschusses des Polyacrylsäurebindemittels (18) von den Oberflächen der Geräte verwendet wird;
das Bestimmen des pH-Wertes der Menge an Waschwasserlösung unter Verwendung des Neutralisierungssystems;
das Einleiten einer ausreichenden Menge an Basenlösung (64) von einem Speichertank (66) des Neutralisierungssystems, um den pH-Wert der Waschwasserlösung über etwa 8,0 zu erhöhen, wenn der pH-Wert der Menge an Waschwassersystem, wie durch das Neutralisierungssystem bestimmt, unter etwa 8,0 liegt; und
das Koppeln eines geschlossenen Haubenwand-Waschwasseraufbereitungssystems (100) an eine Form gebende Haubenwand (22) des Geräts, wobei das geschlossene Haubenwand-Waschwasseraufbereitungssystem imstande ist, eine Menge einer zweiten Waschwasserlösung (102) einzuleiten, um überschüssiges Polyacrylsäurebindemittel von mindestens einer Wand (65) der Form gebenden Haubenwand zu entfernen.

42. Verfahren nach Anspruch 41, des Weiteren umfassend das strömungstechnische Koppeln des geschlossenen Haubenwand-Waschwasseraufbereitungssystems an einen Bindemittelansatzbehälter (72), wobei der Bindemittelansatzbehälter zum Zuleiten des Polyacrylsäurebindemittels zu den Glaserzeugungsgeräten verwendet wird.

43. Verfahren nach Anspruch 41, des Weiteren umfassend das strömungstechnische Koppeln des Bindemittelansatzbehälters (72) an den Waschwassertank, wobei der Bindemittelansatzbehälter zum Zuleiten des Polyacrylsäurebindemittels zu den Glaserzeugungsgeräten verwendet wird.

44. Verfahren nach Anspruch 41, wobei die Bestimmung des pH-Wertes und das Einleiten einer Menge der Basenlösung umfasst:
das Koppeln mindestens einer pH-Sonde (60) des Neutralisierungssystems in dem Waschwassertank, wobei die mindestens eine pH-Sonde elektrisch an das Neutralisierungssystem gekoppelt ist;
das Bestimmen des pH-Wertes der Menge an Waschwasserlösung in dem Waschwassertank unter Verwendung der mindestens einen pH-Sonde;
das Leiten eines elektrischen Signals von der mindestens einen pH-Sonde zu dem Neutralisierungssystem, wobei das elektrische Signal den pH-Wert der Menge an Waschwasserlösung darstellt; und
das Einleiten einer Menge an Basenlösung von einem Speichertank des Neutralisierungssystems als eine Funktion des elektrischen Signals, wobei die Menge an Basenlösung ausreicht, um den pH-Wert der Waschwasserlösung über etwa 8,0 zu erhöhen.

45. Verfahren nach Anspruch 41, wobei das Einleiten einer Menge an Basenlösung das Einleiten einer Menge einer Hydroxidlösung von einem Speichertank des Neutralisierungssystems als Funktion des elektrischen Signals umfasst, wobei die Menge an Hydroxidlösung ausreicht, um den pH-Wert der Waschwasserlösung über etwa 8,0 zu erhöhen.

46. Verfahren nach Anspruch 45, wobei das Einleiten einer Menge an Hydroxidlösung das Einleiten einer Menge einer Natriumhydroxidlösung von einem Speichertank des Neutralisierungssystems als Funktion des elektrischen Signals umfasst, wobei die Menge an Natriumhydroxidlösung ausreicht, um den pH-Wert der Waschwasserlösung über etwa 8,0 zu erhöhen.

47. Verfahren nach Anspruch 45, wobei das Einleiten einer Menge an Hydroxidlösung das Einleiten einer Menge einer 50 Gewichtsprozent Lösung von Natriumhydroxid in Wasser von einem Speichertank des Neutralisierungssystems als Funktion des elektrischen Signals umfasst, wobei die Menge an 50 Gewichtsprozent Lösung von Natriumhydroxid in Wasser ausreicht, um den pH-Wert der Waschwasserlösung über etwa 8,0 zu erhöhen.

48. Verfahren zur Verringerung der Säurekorrosion der Oberflächen von Geräten, die zur Erzeugung Polyacrylsäure gebundener Fasern mit einem Polyacrylsäurebindemittel verwendet werden, wobei das Verfahren die folgenden Schritte umfasst:
das Einleiten einer Menge einer Base zur Erhöhung des pH-Wertes einer Waschwasserlösung über etwa 8,0, wenn der pH-Wert der Menge eines Waschwassersystems, wie durch das Neutralisierungssystem bestimmt, unter etwa 8,0 liegt.

49. Verfahren nach Anspruch 48, wobei das Einleiten einer Menge einer Base den Schritt des Mischens einer Basenlösung von einem Hydroxid umfasst, das in Wasser löslich ist und ein schwache Säure/starke Base-Salz bildet.

50. Verfahren nach Anspruch 48, wobei das Einleiten einer Menge einer Base das Einleiten einer Menge eines Hydroxids umfasst.

51. Verfahren nach Anspruch 50, wobei das Hydroxid eine wässerige Natriumhydroxidlösung ist.

52. Verfahren nach Anspruch 51, wobei die Hydroxidlösung eine 50 Gewichtsprozent Lösung von Natriumhydroxid in Wasser ist.

53. Verfahren nach Anspruch 51, wobei das Hydroxid ein Feststoff ist.

## Revendications

1. Procédé pour réduire la corrosion par les acides des surfaces d'un équipement utilisé pour former des fibres liées par un poly(acide acrylique), comprenant un liant de poly(acide acrylique) et un co-liant d'acide maléique ou un co-liant d'anhydride maléique, le procédé comprenant l'étape :
d'introduction d'une quantité de base pour augmenter le pH d'une solution d'eau de lavage, jusqu'à au moins environ 8,5 quand le pH de ladite quantité de système d'eau de lavage, déterminé par ledit système de neutralisation, est inférieur à environ 8,5.

2. Procédé selon la revendication 1, dans lequel l'introduction d'une quantité de base comprend l'étape de mélange d'une solution de base, obtenue à partir d'un hydroxyde qui est hydrosoluble et formera un sel d'acide faible/base forte.

3. Procédé selon la revendication 1, dans lequel l'introduction d'une quantité de base comprend l'introduction d'une quantité d'un hydroxyde.

4. Procédé selon la revendication 3, dans lequel l'hydroxyde est une solution aqueuse d'hydroxyde de sodium.

5. Procédé selon la revendication 3, dans lequel la solution d'hydroxyde est une solution d'hydroxyde de sodium à 50 % en poids dans l'eau.

6. Procédé selon la revendication 3, dans lequel l'hydroxyde est un solide.

7. Procédé selon la revendication 1, pour réduire la corrosion par les acides des surfaces d'un équipement utilisé pour former des fibres liées par un poly(acide acrylique), comprenant un liant de poly(acide acrylique) et un co-liant d'acide maléique ou un co-liant d'anhydride maléique (18) liés à une surface d'une fibre de verre, le procédé comprenant :
le couplage d'un système de neutralisation (62) à une cuve d'eau de lavage (32) d'un système d'eau de lavage en circuit fermé (12) ayant une quantité de solution d'eau de lavage (26), ladite quantité de solution d'eau de lavage étant utilisée pour éliminer un excès du liant de poly(acide acrylique) des surfaces de l'équipement ;
la détermination du pH de ladite quantité de solution d'eau de lavage au moyen dudit système de neutralisation ; et
l'introduction d'une quantité suffisante de solution de base (64) provenant d'une cuve de stockage (66) dudit système de neutralisation, pour augmenter le pH de ladite solution d'eau de lavage jusqu'à au moins environ 8,5 quand le pH de ladite quantité de système d'eau de lavage, déterminé par ledit système de neutralisation, est inférieur à environ 8,5.

8. Procédé selon la revendication 7, dans lequel la détermination du pH et l'introduction d'une quantité de solution de base comprennent :
le couplage d'au moins une sonde de pH (60) dudit système de neutralisation à l'intérieur de ladite cuve d'eau de lavage, ladite au moins une sonde de pH étant couplée électriquement audit système de neutralisation ;
la détermination du pH de ladite quantité de solution d'eau de lavage à l'intérieur de ladite cuve d'eau de lavage au moyen de ladite au moins une sonde de pH ;
l'envoi d'un signal électrique depuis ladite au moins une sonde de pH audit système de neutralisation, ledit signal électrique représentant le pH de ladite quantité de solution d'eau de lavage ;
et l'introduction d'une quantité de solution de base provenant d'une cuve de stockage dudit système de neutralisation en fonction dudit signal électrique, ladite quantité de solution de base étant suffisante pour augmenter le pH de ladite solution d'eau de lavage jusqu'à au moins environ 8,5.

9. Procédé selon la revendication 8, dans lequel l'introduction d'une quantité de solution de base comprend l'introduction d'une quantité d'une solution d'hydroxyde provenant d'une cuve de stockage dudit système de neutralisation en fonction dudit signal électrique, ladite quantité de solution d'hydroxyde étant suffisante pour augmenter le pH de ladite solution d'eau de lavage jusqu'à au moins environ 8,5.

10. Procédé selon la revendication 9, dans lequel l'introduction d'une quantité de solution d'hydroxyde comprend l'introduction d'une quantité d'une solution d'hydroxyde de sodium provenant d'une cuve de stockage dudit système de neutralisation en fonction dudit signal électrique, ladite quantité de solution d'hydroxyde de sodium étant suffisante pour augmenter le pH de ladite solution d'eau de lavage jusqu'à au moins environ 8,5.

11. Procédé selon la revendication 9, dans lequel l'introduction d'une quantité de solution d'hydroxyde comprend l'introduction d'une quantité de solution à 50 % en poids d'hydroxyde de sodium dans l'eau provenant d'une cuve de stockage dudit système de neutralisation en fonction dudit signal électrique, ladite quantité de solution à 50 % en poids d'hydroxyde de sodium dans l'eau étant suffisante pour augmenter le pH de ladite solution d'eau de lavage jusqu'à au moins environ 8,5.

12. Procédé selon la revendication 7, pour réduire la corrosion par les acides de l'équipement utilisé pour former des fibres enrobées par un poly(acide acrylique), le procédé comprenant :
le couplage d'un système de neutralisation (62) à une cuve d'eau de lavage (32) d'un système d'eau de lavage en circuit fermé (12) ayant une quantité de solution d'eau de lavage (26), ladite quantité de solution d'eau de lavage étant utilisée pour éliminer un excès du liant de poly(acide acrylique) des surfaces de l'équipement ;
la détermination du pH de ladite quantité de solution d'eau de lavage au moyen dudit système de neutralisation ;
l'introduction d'une quantité suffisante de solution de base (64) provenant d'une cuve de stockage (66) dudit système de neutralisation, pour augmenter le pH de ladite solution d'eau de lavage jusqu'à au moins environ 8,5 quand le pH de ladite quantité de système d'eau de lavage, déterminé par ledit système de neutralisation, est inférieur à environ 8,5 ; et
le couplage d'un système (100) de récupération d'eau de lavage de hotte en circuit fermé à une hotte de réception (22) de l'équipement, ledit système de récupération d'eau de lavage de hotte en circuit fermé étant capable d'introduire une quantité d'une seconde solution de lavage (102) pour éliminer l'excès de liant de poly(acide acrylique) et de co-liant d'acide maléique ou de co-liant d'anhydride maléique (18) d'au moins une paroi (65) de ladite hotte de réception.

13. Procédé selon la revendication 12, comprenant en outre le couplage fluidique dudit système de récupération d'eau de lavage de hotte en circuit fermé à une cuve de préparation de liant (72), ladite cuve de préparation de liant étant utilisée pour fournir le liant de poly(acide acrylique) et le co-liant d'acide maléique ou le co-liant d'anhydride maléique à l'équipement de fabrication de verre.

14. Procédé selon la revendication 12, comprenant en outre le couplage fluidique d'une cuve de préparation de liant à ladite cuve d'eau de lavage, ladite cuve de préparation de liant étant utilisée pour fournir le liant de poly(acide acrylique) et le co-liant d'acide maléique ou le co-liant d'anhydride maléique à l'équipement de fabrication de verre.

15. Procédé selon la revendication 12, dans lequel la détermination du pH et l'introduction d'une quantité de solution de base comprennent :
le couplage d'au moins une sonde de pH (60) dudit système de neutralisation à l'intérieur de ladite cuve d'eau de lavage, ladite au moins une sonde de pH étant couplée électriquement audit système de neutralisation ;
la détermination du pH de ladite quantité de solution d'eau de lavage à l'intérieur de ladite cuve d'eau de lavage au moyen de ladite au moins une sonde de pH ;
l'envoi d'un signal électrique depuis ladite au moins une sonde de pH vers ledit système de neutralisation, ledit signal électrique représentant le pH de ladite quantité de solution d'eau de lavage ; et
l'introduction d'une quantité de solution de base provenant d'une cuve de stockage dudit système de neutralisation en fonction dudit signal électrique, ladite quantité de solution de base étant suffisante pour augmenter le pH de ladite solution d'eau de lavage jusqu'à au moins environ 8,5.

16. Procédé selon la revendication 12, dans lequel l'introduction d'une quantité de solution de base comprend l'introduction d'une quantité d'une solution d'hydroxyde provenant d'une cuve de stockage dudit système de neutralisation en fonction dudit signal électrique, ladite quantité de solution d'hydroxyde étant suffisante pour augmenter le pH de ladite solution d'eau de lavage jusqu'à au moins environ 8,5.

17. Procédé selon la revendication 16, dans lequel l'introduction d'une quantité d'une solution d'hydroxyde comprend l'introduction d'une quantité d'une solution d'hydroxyde de sodium provenant d'une cuve de stockage dudit système de neutralisation en fonction dudit signal électrique, ladite quantité de solution d'hydroxyde de sodium étant suffisante pour augmenter le pH de ladite solution d'eau de lavage jusqu'à au moins environ 8,5.

18. Procédé selon la revendication 16, dans lequel l'introduction d'une quantité de solution d'hydroxyde comprend l'introduction d'une quantité d'une solution à 50 % en poids d'hydroxyde de sodium dans l'eau provenant d'une cuve de stockage dudit système de neutralisation en fonction dudit signal électrique, ladite quantité de solution à 50 % en poids d'hydroxyde de sodium dans l'eau étant suffisante pour augmenter le pH de ladite solution d'eau de lavage jusqu'à au moins environ 8,5.

19. Chaîne de fabrication de verre (10) comprenant un système de récupération d'eau de lavage en circuit fermé (12), ledit système de récupération d'eau de lavage en circuit fermé étant utilisé pour éliminer l'excès de liant et de co-liant (18) de l'équipement utilisé lors de la fabrication d'une fibre de verre, le système de récupération d'eau de lavage en circuit fermé comprenant :
une cuve d'eau de lavage (32) qui est en couplage fluidique avec l'équipement, ladite cuve d'eau de lavage contenant une quantité de solution d'eau de lavage (26) ;
au moins une sonde de pH (60) positionnée à l'intérieur de ladite cuve d'eau de lavage capable de mesurer le pH de ladite quantité de solution d'eau de lavage à l'intérieur de ladite cuve d'eau de lavage ;
un système de neutralisation (62) couplée électriquement à ladite au moins une sonde de pH, ledit système de neutralisation contenant un processeur(63) et une cuve de stockage (66), ladite cuve de stockage contenant une quantité de solution de base (64),
dans laquelle ledit processeur peut interpréter un signal électrique provenant de ladite au moins une sonde de pH et représentant le pH de ladite quantité de solution d'eau de lavage et envoyer une quantité de ladite solution de base à partir de ladite cuve de stockage vers ladite cuve d'eau de lavage quand le pH de ladite solution d'eau de lavage, tel qu'interprété par ledit processeur, est un pH prédéterminé.

20. Chaîne de fabrication de verre selon la revendication 19, dans laquelle ledit pH de ladite solution d'eau de lavage, tel qu'interprété par ledit processeur, est inférieur à environ 8,5.

21. Chaîne de fabrication de verre selon la revendication 19, dans laquelle ladite solution de base comprend une base constituée par un hydroxyde qui est hydrosoluble et formera et neutralisera ladite solution d'eau de lavage sans produire de sels insolubles.

22. Chaîne de fabrication de verre selon la revendication 19, dans laquelle ladite solution de base comprend une solution d'hydroxyde choisie dans le groupe comprenant une solution d'hydroxyde de sodium, une solution d'hydroxyde de calcium et une solution d'hydroxyde d'ammonium.

23. Chaîne de fabrication de verre selon la revendication 22, dans laquelle ladite solution d'hydroxyde comprend une solution à environ 50 % en poids d'hydroxyde dans l'eau.

24. Chaîne de fabrication de verre selon la revendication 19, comprenant en outre un système de récupération d'eau de lavage de hotte en circuit fermé (100) couplé à une hotte de fabrication (22) de l'équipement.

25. Chaîne de fabrication de verre selon la revendication 24, dans laquelle ledit système de récupération de hotte en circuit fermé comprend une cuve de recyclage de récupération de hotte (104), qui est en couplage fluidique avec ladite hotte de fabrication, ladite cuve de recyclage de récupération de hotte contenant une quantité d'une seconde solution d'eau de lavage (102), ladite seconde solution d'eau de lavage étant utilisée pour laver au moins une paroi (65) de ladite hotte de fabrication.

26. Chaîne de fabrication de verre selon la revendication 24, dans laquelle ledit système de récupération d'eau de lavage de hotte en cycle fermé est couplé à une cuve de préparation de liant (72).

27. Chaîne de fabrication de verre selon la revendication 19, dans laquelle ladite cuve d'eau de lavage est couplée à une cuve de préparation de liant.

28. Chaîne de fabrication de verre selon la revendication 19, comprenant un système de récupération d'eau de lavage en circuit fermé (12), ledit système de récupération d'eau de lavage en circuit fermé étant utilisé pour éliminer l'excès de liant (18) de l'équipement utilisé lors de la fabrication d'une fibre de verre, le système de récupération d'eau de lavage en circuit fermé comprenant :
une cuve d'eau de lavage (32) qui est en couplage fluidique avec l'équipement, ladite cuve d'eau de lavage contenant une quantité de solution d'eau de lavage (26) ;
au moins une sonde de pH (60) positionnée à l'intérieur de ladite cuve d'eau de lavage capable de mesurer le pH de ladite quantité de solution d'eau de lavage à l'intérieur de ladite cuve d'eau de lavage ;
un système de neutralisation (62) couplée électriquement à ladite au moins une sonde de pH, ledit système de neutralisation contenant un processeur(63) et une cuve de stockage (66), ladite cuve de stockage contenant une quantité de solution de base (64),
dans laquelle ledit processeur peut interpréter un signal électrique provenant de ladite au moins une sonde de pH et représentant le pH de ladite quantité de solution d'eau de lavage et diriger une quantité de ladite solution de base depuis ladite cuve de stockage à ladite cuve d'eau de lavage quand le pH de ladite solution d'eau de lavage, tel qu'interprété par ledit processeur, est inférieur à environ 8,0.

29. Chaîne de fabrication de verre selon la revendication 28, dans laquelle ladite solution de base comprend une base constituée par un hydroxyde qui est hydrosoluble et formera et neutralisera ladite solution d'eau de lavage sans produire de sels insolubles.

30. Chaîne de fabrication de verre selon la revendication 28, dans laquelle ladite solution de base comprend une solution d'hydroxyde choisie dans le groupe comprenant une solution d'hydroxyde de sodium, une solution d'hydroxyde de calcium et une solution d'hydroxyde d'ammonium.

31. Chaîne de fabrication de verre selon la revendication 30, dans laquelle ladite solution d'hydroxyde comprend une solution à environ 50 % en poids d'hydroxyde dans l'eau.

32. Chaîne de fabrication de verre selon la revendication 28, comprenant en outre un système de récupération d'eau de lavage de hotte en circuit fermé (100) couplé à une hotte de fabrication (22) de l'équipement.

33. Chaîne de fabrication de verre selon la revendication 32, dans laquelle ledit système de récupération de hotte en circuit fermé comprend une cuve de recyclage de récupération de hotte (104) qui est en couplage fluidique avec ladite hotte de fabrication, ladite cuve de recyclage de récupération de hotte contenant une quantité d'une seconde solution d'eau de lavage (102), ladite seconde solution d'eau de lavage étant utilisée pour laver au moins une paroi (65) de ladite hotte de fabrication.

34. Chaîne de fabrication de verre selon la revendication 32, dans laquelle ledit système de récupération d'eau de lavage de hotte en cycle fermé est couplé à une cuve de préparation de liant (72).

35. Chaîne de fabrication de verre selon la revendication 28, dans laquelle ladite cuve d'eau de lavage est couplée à une cuve de préparation de liant.

36. Procédé selon la revendication 7, pour réduire la corrosion par les acides des surfaces d'un équipement utilisé pour former des fibres liées par un poly(acide acrylique), comprenant un liant de poly(acide acrylique) lié à la surface d'une fibre de verre, le procédé comprenant :
le couplage d'un système de neutralisation (62) à une cuve d'eau de lavage (32) d'un système d'eau de lavage en circuit fermé (12) ayant une quantité de solution d'eau de lavage (26), ladite quantité de solution d'eau de lavage étant utilisée pour éliminer un excès du liant de poly(acide acrylique) (18) des surfaces de l'équipement ;
la détermination du pH de ladite quantité de solution d'eau de lavage au moyen dudit système de neutralisation ; et
l'introduction d'une quantité suffisante de solution de base (64) provenant d'une cuve de stockage (62) dudit système de neutralisation, pour augmenter le pH de ladite solution d'eau de lavage au-dessus d'environ 8,0 quand le pH de ladite quantité de système d'eau de lavage, déterminé par ledit système de neutralisation, est inférieur à environ 8,0.

37. Procédé selon la revendication 36, dans lequel la détermination du pH et l'introduction d'une quantité de solution de base comprennent:
le couplage d'au moins une sonde de pH (60) dudit système de neutralisation à l'intérieur de ladite cuve d'eau de lavage, ladite au moins une sonde de pH étant couplée électriquement audit système de neutralisation; la détermination du pH de ladite quantité de solution d'eau de lavage à l'intérieur de ladite cuve d'eau de lavage au moyen de ladite au moins une sonde de pH ; l'envoi d'un signal électrique depuis ladite au moins une sonde de pH audit système de neutralisation, ledit signal électrique représentant le pH de ladite quantité de solution d'eau de lavage ; et l'introduction d'une quantité de solution de base provenant d'une cuve de stockage dudit système de neutralisation en fonction dudit signal électrique, ladite quantité de solution de base étant suffisante pour augmenter le pH de ladite solution d'eau de lavage au-dessus d'environ 8,0.

38. Procédé selon la revendication 37, dans lequel l'introduction d'une quantité de solution de base comprend l'introduction d'une quantité d'une solution d'hydroxyde provenant d'une cuve de stockage dudit système de neutralisation en fonction dudit signal électrique, ladite quantité de solution d'hydroxyde étant suffisante pour augmenter le pH de ladite solution d'eau de lavage au-dessus d'environ 8,0.

39. Procédé selon la revendication 38, dans lequel l'introduction d'une quantité de solution d'hydroxyde comprend l'introduction d'une quantité d'une solution d'hydroxyde de sodium provenant d'une cuve de stockage dudit système de neutralisation en fonction dudit signal électrique, ladite quantité de solution d'hydroxyde de sodium étant suffisante pour augmenter le pH de ladite solution d'eau de lavage au-dessus d'environ 8,0.

40. Procédé selon la revendication 38, dans lequel l'introduction d'une quantité de solution d'hydroxyde comprend l'introduction d'une quantité de solution à 50 % en poids d'hydroxyde de sodium dans l'eau provenant d'une cuve de stockage dudit système de neutralisation en fonction dudit signal électrique, ladite quantité de solution à 50 % en poids d'hydroxyde de sodium dans l'eau étant suffisante pour augmenter le pH de ladite solution d'eau de lavage au-dessus d'environ 8,0.

41. Procédé pour réduire la corrosion par les acides de l'équipement utilisé pour former des fibres enrobées par un poly(acide acrylique), le procédé comprenant :
le couplage d'un système de neutralisation (62) à une cuve d'eau de lavage (32) d'un système d'eau de lavage en circuit fermé (12) ayant une quantité de solution d'eau de lavage (26), ladite quantité de solution d'eau de lavage étant utilisée pour éliminer un excès du liant de poly(acide acrylique) (18) des surfaces de l'équipement ;
la détermination du pH de ladite quantité de solution d'eau de lavage au moyen dudit système de neutralisation ;
l'introduction d'une quantité suffisante de solution de base (64) provenant d'une cuve de stockage (66) dudit système de neutralisation, pour augmenter le pH de ladite solution d'eau de lavage au-dessus d'environ 8,0 quand le pH de ladite quantité de système d'eau de lavage, déterminé par ledit système de neutralisation, est inférieur à environ 8,0 ; et
le couplage d'un système (100) de récupération d'eau de lavage de hotte en circuit fermé à une hotte de fabrication (22) de l'équipement, ledit système de récupération d'eau de lavage de hotte en circuit fermé étant capable d'introduire une quantité d'une seconde solution de lavage (102) pour éliminer l'excès de liant de poly(acide acrylique) d'au moins une paroi (65) de ladite hotte de fabrication.

42. Procédé selon la revendication 41, comprenant en outre le couplage fluidique dudit système de récupération d'eau de lavage de hotte en circuit fermé à une cuve de préparation de liant (72), ladite cuve de préparation de liant étant utilisée pour fournir le liant de poly(acide acrylique) à l'équipement de fabrication de verre.

43. Procédé selon la revendication 41, comprenant en outre le couplage fluidique de ladite cuve de préparation de liant à ladite cuve d'eau de lavage, ladite cuve de préparation de liant étant utilisée pour fournir le liant de poly(acide acrylique) à l'équipement de fabrication de verre.

44. Procédé selon la revendication 41, dans lequel la détermination du pH et l'introduction d'une quantité de solution de base comprennent : le couplage d'au moins une sonde de pH (60) dudit système de neutralisation à l'intérieur de ladite cuve d'eau de lavage, ladite au moins une sonde de pH étant couplée électriquement audit système de neutralisation ; la détermination du pH de ladite quantité de solution d'eau de lavage à l'intérieur de ladite cuve d'eau de lavage au moyen de ladite au moins une sonde de pH ; l'envoi d'un signal électrique depuis ladite au moins une sonde de pH audit système de neutralisation, ledit signal électrique représentant le pH de ladite quantité de solution d'eau de lavage ; et l'introduction d'une quantité de solution de base provenant d'une cuve de stockage dudit système de neutralisation en fonction dudit signal électrique, ladite quantité de solution basique étant suffisante pour augmenter le pH de ladite solution d'eau de lavage au-dessus d'environ 8,0.

45. Procédé selon la revendication 41, dans lequel l'introduction d'une quantité de solution de base comprend l'introduction d'une quantité d'une solution d'hydroxyde provenant d'une cuve de stockage dudit système de neutralisation en fonction dudit signal électrique, ladite quantité de solution d'hydroxyde étant suffisante pour augmenter le pH de ladite solution d'eau de lavage au-dessus d'environ 8,0.

46. Procédé selon la revendication 45, dans lequel l'introduction d'une quantité de solution d'hydroxyde comprend l'introduction d'une quantité d'une solution d'hydroxyde de sodium provenant d'une cuve de stockage dudit système de neutralisation en fonction dudit signal électrique, ladite quantité de solution d'hydroxyde de sodium étant suffisante pour augmenter le pH de ladite solution d'eau de lavage au-dessus d'environ 8,0.

47. Procédé selon la revendication 45, dans lequel l'introduction d'une quantité de solution d'hydroxyde comprend l'introduction d'une quantité d'une solution à 50 % en poids d'hydroxyde de sodium dans l'eau provenant d'une cuve de stockage dudit système de neutralisation en fonction dudit signal électrique, ladite quantité de ladite solution à 50 % en poids d'hydroxyde de sodium dans l'eau étant suffisante pour augmenter le pH de ladite solution d'eau de lavage au-dessus d'environ 8,0.

48. Procédé pour réduire la corrosion par les acides des surfaces de l'équipement utilisé pour former des fibres liées par un poly(acide acrylique), comprenant un liant de poly(acide acrylique), le procédé comprenant :
l'introduction d'une quantité d'une base pour augmenter le pH d'une solution de lavage au-dessus d'environ 8,0 quand le pH de ladite quantité de système d'eau de lavage, déterminé par ledit système de neutralisation, est inférieur à environ 8,0.

49. Procédé selon la revendication 48, dans lequel l'introduction d'une quantité de base comprend l'étape de mélange d'une solution de base obtenue à partir d'un hydroxyde qui est hydrosoluble et formera un sel d'acide faible/base forte.

50. Procédé selon la revendication 48, dans lequel l'introduction d'une quantité de base comprend l'introduction d'une quantité d'hydroxyde.

51. Procédé selon la revendication 50, dans lequel l'hydroxyde est une solution aqueuse d'hydroxyde de sodium.

52. Procédé selon la revendication 51, dans lequel la solution d'hydroxyde est une solution à 50 % en poids d'hydroxyde de sodium dans l'eau.

53. Procédé selon la revendication 51, dans lequel l'hydroxyde est un solide.
